# EUROPEAN PATENT APPLICATION

(11) **EP 4 826 334 A1**
(43) Date of publication of application: **21.10.2026**
(21) Application number: 25170363.3
(22) Date of filing: 14.04.2025
(51) Int. Cl.: G01C 21/00

(54) **METHOD FOR TRANSFERRING ROAD ASSOCIATED PROPERTIES**

(71) Applicant: TomTom Navigation B.V., 1011 AC Amsterdam (NL)
(72) Inventor: GEHRELS, Barend Sebastiaan, 1011 AC Amsterdam (NL)
(74) Representative: Bardehle Pagenberg Partnerschaft mbB Patentanwälte Rechtsanwälte

(57) **Abstract**

The present application relates to a computer-implemented method (200) for transferring road properties from a source road network (100) to a target road network. The method (200) comprises selecting (210) a source segment (110) of the source road network (100), wherein the source segment (110) comprises at least one source stretch (115a-115g), the at least one source stretch being associated with one or more respective road properties. In addition, the method (200) comprises matching (220) the source segment (110) of the source road network (100) to the target road network such as to obtain a matching segment in the target road network. In addition, the method (200) comprises transferring (230) the road properties of the at least one source stretch (115a-115g) of the source segment (110) to at least one target stretch of the matching segment in the target road network.

## Description

### Field of the application

The present application relates to a method, a device, and a computer program for transferring associated properties from a source road network to a target road network.

### Technical background

Providing drivers of a vehicle and/or the vehicle itself with additional information, e.g., road associated data and/or properties, during a drive is at the heart of driver assistance technology. In particular, such additional information is adapted to ease the drive of the driver and to enhance the driving safety. Typically, such additional information is defined with respect to a road network, wherein the additional information is associated with a road and/or a stretch of the road.

Therefore, a lot of effort has been made to optimize the provision of such additional information, resulting in different proposals for how such a provision can be made. For example, with the advance of the capability of computers, new techniques became available with ever more precise and detailed assignments of properties to roads and/or stretches of a road of a road network. Consequently, there exist different representations of a road network with respect to the precision and detailedness of the assigned properties. In particular, in a first representation of the road network, a first set of properties can be assigned with a first precision and detailedness, while in a second representation of the road network, a second set of properties, e.g., at least partially overlapping with the first set, can be assigned and can provide a second precision and detailedness different from the first.

Typically, when the first precision is higher than the second precision, e.g., when the property assignment of the first representation is richer than in the second representation, the road network of the second representation may benefit from the property assignment of the first representation. However, as there are normally discrepancies between the different representations (e.g., digital maps) of a same road network the transfer of road associated properties from the first representation to the second representation of the road network may be imprecise.

Therefore, there is a need for an improved method for transferring road associated properties from one road network representation to another.

### Summary

A first aspect relates to a computer-implemented method for transferring road properties from a source digital representation of a road network to a target digital representation of the road network. For convenience, further in the document 'road network' refers to the corresponding digital representation(s) of the physical road network. Further and for the same reason, in this document 'road properties' or 'road property' refers to properties or to a property that can be associated with roads based on any criteria or correlation without necessarily be road properties or property per se.

The method comprises the step of selecting a source segment of the source road network, wherein the source segment comprises at least one source stretch. Specifically, the at least one source stretch is associated with one or more respective road properties. The method further comprises the step of matching the source segment of the source road network to the target road network such as to obtain a matching segment in the target road network. The method further comprises the step of transferring the road properties of the at least one source stretch of the source segment to at least one target stretch of the matching segment in the target road network.

The source road network and/or the target road network may comprise a plurality of roads. For example, the source road network and/or the target road network may comprise roads associated with source region and/or a target region. A source road network and/or a target road network associated with a source region and/or a target region may comprise that the source road network and/or the target road network comprise digital information, e.g., a digital map, of the source region and/or a target region. For example, the source road network may comprise roads associated with a source region and the target road network may comprise roads associated with a target region. Generally, the source region and the target region may essentially coincide. For example, the source region may be equal the target region. Specifically, the source region may comprise the same roads.

A stretch of a road may be a part of a road. A road of the source road network and/or the target road network may comprise a plurality of stretches. For example, the road of the source road network and/or the target road network may be divided and/or decomposed into stretches. A road of the source road network may comprise a first stretch and a second stretch. In addition, a corresponding road of the target road network may comprise corresponding first and second stretches.

Generally, a road property may comprise a characteristic associated with a road and/or a stretch of a road. Specifically, the characteristic associated with the road and/or the stretch of the road may comprise a characteristic that is relevant for a drive of a vehicle along the road and/or the stretch of the road. For example, at least one road property may comprise a speed limit. For example, a speed limit may be associated with a road and/or a stretch of a road of the source road network and/or the target road network. Specifically, a first speed limit may be associated with a first stretch of a road and a second speed limit may be associated with a second stretch of the road. In addition, or alternatively, the at least one road property may comprise a road condition, e.g., a quality of the road and/or a quality of a stretch of the road. For example, the quality of a road and/or a quality of a stretch of the road may comprise a quality of an asphalting of the road and/or the stretch of the road. In addition, or alternatively, the at least one road property may comprise a number of lanes associated with the road and/or the stretch of the road. In addition, or alternatively, the at least on road property may comprise a traffic information, e.g., traffic information associated with a road and/or a stretch of the road.

In one embodiment, selecting a source segment of the source road network may comprise selecting a portion of a road of the source road network. Specifically, the source segment may be selected such as to comprise at least one source stretch. For example, the source segment may comprise only one source stretch, e.g., the source segment originates at a same point as the source stretch and terminates at a same point as the source stretch. In addition, or alternatively, the source segment may comprise at least two source stretches. Generally, the at least one source stretch may be associated with one or more respective road properties. For example, the source segment may comprise a first and a second source stretch. The first source stretch may be associated with a first set of road properties and the second source stretch may be associated with a second set of road properties. For example, the first set of road properties and the second set of road properties may comprise a same type of a road property, e.g., a speed limit and/or a lane number, and/or a road condition. For example, the first set of road properties may comprise a first speed limit and a first road condition and the second set of road properties may comprise a second speed limit and a second lane number.

The source segment may be matched to the target road network, e.g., matching based on a map matcher, such as to obtain a matching segment in the target road network. For example, matching the source segment to the target road network may comprise identifying a corresponding segment of the target road network. Specifically, identifying a corresponding segment of the target road network may comprise that the corresponding segment is based on an approximation to the source segment. Generally, the matching segment, e.g., the corresponding segment of the target road network that matches the source segment, may comprise at least one target stretch of the target road network. The number of target stretches of the matching segment and the number of source stretches of the source segment may coincide. In particular, there may be a bijective correspondence between the source stretches of the source segment and the target stretches of the matching segment. For example, a first source stretch of the source segment may correspond to a first target stretch of the matching segment and a second source stretch of the source segment may correspond to a second target stretch of the matching segment. In some embodiments, the source segment may be matched to the target road network such that the matching segment comprises target stretches corresponding to the source stretches.

Alternatively, the number of target stretches of the matching segment may differ from the number of source stretches of the source segment. For example, the matching segment may comprise less target stretches than the source segment comprises source stretches. In some embodiments, matching the source segment of the source road network to the target road network may comprise matching the source segment such as to obtain the matching segment and subsequently dividing and/or partitioning the matching segment into target stretches. Specifically, dividing and/or partitioning the matching segment into target stretches may be based on the division and/or partitioning of the source segment into the at least one source stretch.

Transferring the at least one road property of the at least one source stretch of the source segment to the at least one target stretch of the matching segment in the target road network may comprise that a road property associated with a source stretch is associated with and/or assigned to a corresponding target stretch. For example, a first source stretch may be associated with a first set of road properties and a second source stretch may be associated with a second set of road properties. Transferring the at least one road property may comprise transferring the first set of road properties of the first source stretch of the source segment to a first target stretch of the matching segment and transferring the second set of road properties of the second source stretch of the source segment to a second target stretch of the matching segment. For example, after the transfer, the first target stretch may be associated with the first set of road properties and the second target stretch may be associated with the second set of road properties.

Transferring road properties of the at least one source stretch to the at least one target stretch of the matching segment based on a matching of the source segment to the target road network allows for increasing the quality and precision of the matching of the source segment to the target road network, thereby improving the quality and precision of the transfer of the road properties. Typically, the quality and the precision of the matching of the source segment to the target road network is based on the length of the source segment, e.g., the longer the source segment the better the matching. For example, a longer source segment may be better embedded into a context of the source road network and the context may be used in the matching process.

Transferring the road properties from the source road network to the target road network per source segment, e.g., based on source stretches, allows for increasing the quality and precision of the matching of the source segment to the target road network, thereby improving the quality and precision of the transfer of the road properties.

Generally, the source segment may originate at an initial source node. In addition, or alternatively, the source segment may terminate at a terminal source node.

The source segment may be selected such that the source segment originates at an initial source node and/or terminates at a terminal source node. For example, the initial source node and/or the terminal source node may comprise a node of the source road network. Specifically, the initial source node and/or the terminal source node may comprise a fork node of a road, e.g., a point of the source road network, where the road splits into two or more roads. In addition, or alternatively, the initial and/or terminal source node may comprise a merge node of road, e.g., a point of the source road network, where two or more roads merge into one road. Generally, the initial source node and/or the terminal source node may comprise a characteristic point of the source road network, e.g., a point that can be distinguished from other points of the source road network. Such point may be distinguished based on a change of one or more characteristics of a pertinent road at the point, such as, number of lanes, maximum speed, road surface, district boundaries, etc.

A source segment that originates at an initial source node and/or that terminates at a terminal source node allows for clearly defining the origin of the source segment within the source road network and/or for clearly defining the terminal of the source segment within the source road network. Clearly defining the origin and/or the terminal of the source segment contributes to the quality and the precision of the matching process, e.g., the process of matching the source segment to the target road network such as to obtain the matching segment.

A degree of a node may comprise a number of roads that lead to the node, e.g., enter the node, and a number of roads that exit the node. In other words, if the road network is represented as a graph, the degree of a vertex (a node) may comprise the number of edges (road segments) that are adjacent to the vertex (the node). Specifically, the initial and/or terminal source node may be of a degree different than two, e.g., the degree of the initial and/or terminal source node may be larger than two. For example, the degree of the initial and/or terminal source node may be three. A node of degree three may comprise a node of a road network, where a road splits into two roads, e.g., three roads may be incident at the node. In addition, or alternatively, a node of degree three may comprise a node of a road network, where two roads merge into one road.

An initial and/or terminal source node of the source segment of degree three or larger allows for a clearer identification of the source segment within the source road network, thereby enhancing the quality and precision of the matching of the source segment to the target road network, thus optimizing the quality of the transfer of road properties from the at least one source stretch to the at least one target stretch.

In general, the source segment may comprise a set of consecutive points in the source network, wherein each of the points is identified by coordinates in the source network.

For example, the set of consecutive points may be located within the source segment, e.g., within the road comprising the source segment. For example, the set of consecutive points may essentially define the digital map representation of the source segment and/or the road comprising the source segment. In particular, the representation of the source segment and/or the road comprising the source segment may be based on an interpolation of the set of consecutive points, e.g., a polynomial interpolation of the set of consecutive points. The set of consecutive points may be distributed along the source segment. For example, the set of consecutive points may be distributed uniformly along the source segment, e.g., the set of consecutive points may be distributed equidistantly. In addition, or alternatively, the distance between the points of the set of consecutive points may vary. For example, the distance between the points of the set of consecutive points may vary based on a degree of curvature of the source segment and/or the road comprising the source segment.

Specifically, a distance between the points of the set of consecutive points may be smaller in a region of the source segment of a greater curvature, e.g., in regions with a higher curvature the density of points of the set of consecutive points may be higher. In addition, or alternatively, a distance between the points of the set of consecutive points may be larger in a region of the source segment of a lesser curvature, e.g., in regions with a lower curvature the density of points of the set of consecutive points may be smaller. Generally, the initial source node and/or the terminal source node may be associated and/or correspond to a point of the set of consecutive points. For example, a first point of the set of consecutive points may be associated and/or correspond to the initial source node. In addition, or alternatively, a last point of the set of consecutive points may be associated and/or correspond to the terminal source node.

The points of the set of consecutive points may be defined by coordinates in the source road network. For example, each point of the set of points may be associated with a coordinate in the source road network. Specifically, the coordinates of the points of the set of consecutive points may comprise coordinates with respect to a coordinate system associated with the source road network. For example, the coordinates of the set of points may comprise two-dimensional coordinates, e.g., coordinates within a two-dimensional plane. In addition, or alternatively, the coordinates of the set of points may comprise three-dimensional coordinates.

A source segment comprising a set of points, each of which identified and/or associated with a respective coordinate, allows for a simple and efficient representation of the source segment. A simple and efficient representation of the source segment reduces the computational resources needed, e.g., storage space, thereby contributing to an optimization of the efficiency of the method for transferring road properties. In addition, identifying the points of the set of points with coordinates renders the representation of points within source road network unique, e.g., each point may be identified and/or associated with its respective coordinates. Identifying and/or associating each point with unique coordinates enhances the quality and precision of the matching process and thus optimizes the quality of the transfer of road properties.

Specifically, the step of matching the source segment of the source road network to the target road network may comprise associating, to each of the set of consecutive points in the source road network, a road identifier of the target road network.

For example, each road of the target road network may be associated with a road identifier. Specifically, the road identifier of a road in the target road network may comprise an identifier that is unique for the road. For example, a first road of the target road network may be associated with a first road identifier and a second road of the target road network distinct from the first road may be associated with a second road identifier distinct from the first identifier.

In one embodiment, the points of the set of consecutive points in the source road network are individually matched to the target road network. For example, the matching may comprise matching each of the set of consecutive points to at least one road of the target network. For example, matching the set of consecutive points to at least one road of the target network may comprise finding a road of the target road network that closely approximates the layout of the points of the set of consecutive points in the source road network. A point of the set of consecutive points may be associated with a road identifier of the matching road, e.g., the road to which the point is matched to.

For example, the source segment and the corresponding source stretches may be matched to the target road network such as to obtain the matching segment and the corresponding matching source stretches. Generally, consecutive stretches of the source segment may be associated with one or more nodes of degree two. For example, a passage between two consecutive stretches may comprise a node of degree two.

A node of degree two may comprise a node of the source road network where two edges, e.g., road segments or stretches, are adjacent. A passage of two consecutive stretches may comprise a region and/or a point where a first (predecessor) stretch of the two consecutive stretches transitions into a second (successor) stretch of the two consecutive stretches. In other words, consecutive stretches of the source segment, particularly points of the source segment where two source stretches are connected, may not be associated with a node of degree different than two. Generally, the step of selecting the source segment of the source road network may comprise selecting the source segment such that the (inner of) source segment does not comprise a node of degree other than two. In one embodiment, the source segment may be selected such that the origin and/or the terminal of the source segment comprises a node of degree three or higher and such that the part of the source road confined by the origin and terminal (the inner of the source segment) does not comprise nodes of degree other than two.

In general, consecutive stretches of the source segment may differ in at least one road property.

For example, a first source stretch of the source segment may be associated with a first set of road properties and a second source stretch may be associated with a second set of road properties. Specifically, the first source stretch and the second source stretch may be consecutive source stretches of the source road network, e.g., the first and the second source stretch may adjoin each other. In particular, the first and the second source stretch may adjoin each other at a node of degree two. The first set of road properties may comprise a first road property and a second road property. The second set of road properties may comprise a third road property. For example, the first road property of the first set and the third road property of the second set may be of the same type, e.g., the first road property may comprise a speed limit and the third road property may comprise a speed limit. In particular, the speed limit of the first road property may be different to the speed limit of the third road property. Thus, the road properties of two consecutive stretches of source segment may differ in at least one road property, e.g., the speed limit. Generally, a number of road properties of the first set of road properties may differ from a number of road properties of the second set of road properties. For example, the number of road properties of the first set may be larger than the number of road properties of the second set. For example, the first stretch may be associated with a number of lanes of the first stretch and a speed limit, while the second stretch may (only) be associated with a number of lanes of the second stretch.

Generally, the source segment may comprise a plurality of source stretches. In addition, the matching of the source segment of the source road network to the target road network may comprise jointly matching the plurality of source stretches to the target network. For example, jointly matching the plurality of source stretches of the source segment to the target road network may comprise that the (whole) source segment is matched to the target road network. In other words, jointly matching the plurality of source stretches may comprise to not match each source stretch individually to the target road network but to match the source stretches as a whole, e.g., as the source segment, to the target road network.

In one embodiment, matching the plurality of source stretches, e.g., jointly matching the plurality of source stretches, to the target road network may comprise optimizing a cost function. For example, the matching segment and/or the target stretches of the matching segment may be obtained as an optimizer of the optimization of the cost function. Specifically, the optimization of the cost function may comprise a minimization of a distance function, e.g., a metric and/or norm. In addition, or alternatively, the optimization of the cost function may comprise a maximization of a similarity and/or conformity measure.

Jointly matching the plurality of source stretches to the target road network allows for taking into account a context of each of the plurality of source stretches, e.g., a predecessor source stretch and/or a successor source stretch. Generally, the longer the segment to be matched, e.g., the larger the context of each point of the segment to be matched, the better the quality and precision of the matching. Therefore, jointly matching the plurality of source stretches, e.g., matching the source segment at once, maximizes the quality and precision of the matching, thereby optimizing the quality of the transfer of road properties from the at least one source stretch to the at least one target stretch.

**In** some embodiments, the method for transferring road properties may comprise adapting a length of the at least one target stretches of the matching segment based on a length multiplier. For example, the length multiplier may be based on a ratio between a length of the source segment and the matching segment.

For example, adapting the length of the at least one target stretch of the matching segment based on the length multiplier may comprise a rescaling of the length of the at least one target stretch of the matching segment. The length of the matching segment may comprise a distance between a matching initial node and a matching source node along the matching segment. For example, rescaling the length of the at least one target stretch of the matching segment may comprise multiplying the length of the at least one target stretch of the matching segment by the length multiplier. For example, adapting the length of the at least one target stretch of the matching segment based on the length multiplier may comprise adapting the length of each target stretch of the at least one target stretch based on the length multiplier. In particular, the length of each target stretch may be rescaled by the length multiplier. In some embodiments, the length of the target stretches of the matching segment may be adapted based on an individual length multiplier. For example, the length of a first target stretch may be adapted based on a first length multiplier and the length of a second target stretch may be adapted based on a second length multiplier. Generally, the length of the at least one target stretch of the matching segment may be adapted such that the length of the source segment and the length of the adapted matching segment essentially coincide. For example, a length of the source segment that essentially coincides with the length of the adapted matching segment may comprise that the length of the source segment and the length of the adapted matching segment deviate by a predefined threshold. For example, the threshold deviation may be set to at most 20%, preferably at most 15%, more preferably at most 10%, even more preferably at most 5%, most preferably at most 2%.

Adapting the length of the at least one target stretch of the matching segment based on a length multiplier enhances the quality and the precision of the matching, as it allows for aligning the length of the at least one target stretch of the matching segment with the length of the at least one corresponding source stretch of the matched segment. Aligning the length of the at least one target stretch of the matching segment and the length of the at least one corresponding source stretch of the matched segment optimizes the transfer of road properties from the at least one source stretch of the source road network to the at least one target stretch of target road network.

Generally, selecting the source segment of the source road network may comprise selecting a forward road segment from the initial node to the terminal source node. In addition, or alternatively, selecting the source segment of the source road network may comprise selecting a backward road segment from the terminal source node to the initial source node.

For example, the source segment of the source road network may be associated with a directionality and/or orientation. In particular, the directionality and/or orientation of the source segment may be based on a travel direction, e.g., a direction with respect to which a vehicle may transit the source segment. Specifically, a forward road segment associated with a first directionality and/or orientation may be selected and/or a backward road segment associated with a second directionality and/or orientation may be selected. For example, the first directionality and/or orientation may comprise a travel direction of a vehicle from an initial source node to a terminal source node. In other words, the vehicle may transit the source segment from the initial source node to the terminal source node. In addition, or alternatively, the second directionality and/or orientation may comprise a travel direction of the vehicle from the terminal source node to the initial source node. In other words, the vehicle may transit the source segment from the terminal source node to the initial source node. Specifically, the first directionality and/or orientation and the second directionality and/or orientation may comprise opposite directionalities and/or orientations. Generally, the method may further comprise the step of matching the forward source segment to the target road network and transferring road properties from the stretches of the forward source segment to the corresponding matching segment. In addition, or alternatively, the method may further comprise the step of matching the backward source segment to the target road network and transferring road properties from the stretches of the backward source segment to the corresponding matching segment.

Selecting a forward source segment and a backward source segment allows for transferring road properties for both directions, e.g., the forward and the backward direction, individually. In particular, as the road properties associated with the stretches of the forward source segment may differ from the road properties associated with the stretches of the backward source segment, this enhances the quality and precision of the road property transfer. The referenced forward and backward source segments may be separate segments in a set of segments to be matched in the target road network.

Generally, the computer-implemented method for transferring road properties may further comprise injecting data representing at least part of the target road network, indicative of at least part of the transferred road properties, into a client device. In addition, or alternatively, the computer-implemented method for transferring road properties may further comprise providing navigation instructions using data representing at least part of the target road network, indicative of at least part of the transferred road properties, for a user. In addition, or alternatively, the computer-implemented method for transferring road properties may further comprise displaying a visualization of data representing at least part of the target road network, indicative of at least part of the transferred road properties, to a user.

A second aspect relates to a system comprising at least one processing unit. The processing unit is configured to perform the above-describes method for transferring road properties.

In some embodiments, the system may further comprise a client device. Specifically, the client device may be adapted to obtain data representing at least part of the target road network, indicative of at least part of the transferred road properties.

A third aspect relates to a computer program comprising instructions which, when the program is executed by a computer, cause the computer to carry out the above-described method for transferring road properties.

A fourth aspect relates to a system comprising a first computer and a second computer. The first computer comprises computer-readable instructions which, when the instructions are executed by the first computer, cause the first computer to carry out the above-described computer-implemented method for transferring road properties. In addition, the second computer is adapted to obtain data of the target road network from the first computer.

For example, the first computer may be configured to transfer road properties from a source road network to the target road network. Then, the first computer may be configured to transmit and/or forward the processed target road network, e.g., the target road network comprising the transferred road properties, to the second computer.

Obtaining data of the target road network may comprise obtaining road properties associated with roads and/or road segments and/or road stretches of the target road network. For example, obtaining data of the target road network may comprise receiving data of the target road network. Specifically, the second computer may receive the data of the target road network based on a request, e.g., a request that the second computer transmits to the first computer. In addition, or alternatively, obtaining data of the target road network may comprise fetching data of the target road network. Generally, the second computer may comprise a navigation instrument. For example, a navigation instrument may comprise a device configured to provide navigation information, e.g., map data, to a user, e.g., a driver of a vehicle. In some embodiments, the navigation instrument may be at least partially comprised in a vehicle and/or a mobile device.

A fifth aspect relates to map data. The map data comprises road properties of a target road network. Specifically, at least a part of the road properties of the target road network is obtained by the above-described method for transferring road properties.

Whether aspects are implemented as hardware or software means depends upon the particular application and design constraints imposed on the overall system. By way of example, an element, or any portion of an element, or any combination of elements may be implemented as a processing system that may include one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

It is noted that any combination of features that have been described above as belonging to certain embodiments/aspects of the present application is also an embodiment of the present application, provided such a feature combination is feasible, i.e., does not lead to any contradictions.

### Short description of the figures

In the following, exemplary embodiments are described with reference to the following figures:
- **Fig. 1:**: Schematic illustration of a source road network and a source segment;
- **Fig. 2:**: Schematic illustration of an exemplary embodiment of a method for transferring road properties from a source road network to a target road network;
- **Fig. 3:**: Schematic illustration of an exemplary embodiment of a method for transferring road properties from a source road network to a target road network;
- **Fig. 4:**: Schematic illustration of an exemplary embodiment of a system for transferring road properties from a source road network to a target road network.

### Detailed description of preferred embodiments

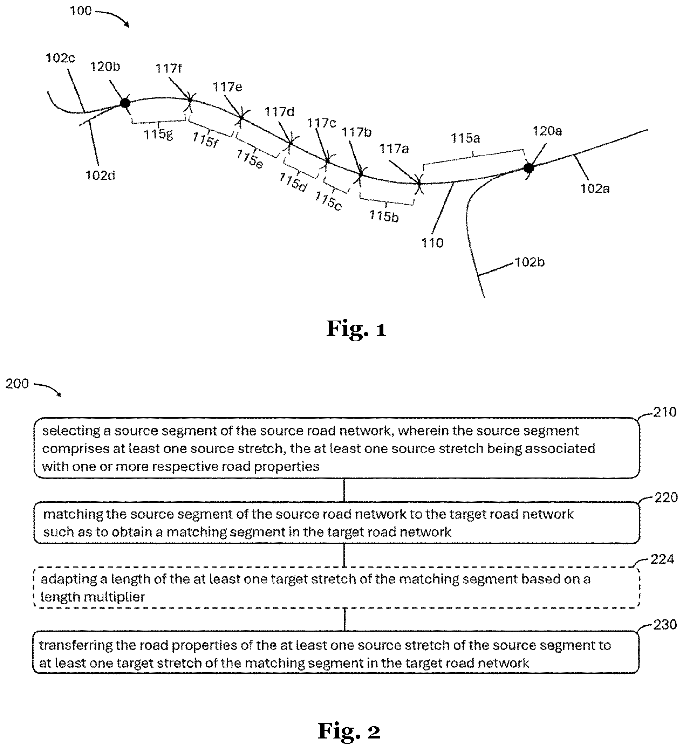

Figure 1 shows a schematic illustration of a source road network 100. The source road network 100 comprises a plurality of roads 102a, 102b, 102c, 102d. For example, the road 102a splits at the node 120a. In particular, the road 102a splits in node 120a into the road 102b and the road 102a, e.g., the road 102a continuous along the segment 110. In addition, the road 102a splits at the node 120b. Specifically, the road 102a splits at the node 120b into the roads 102c and 102d. In other words, the node 120a is a node of degree three, e.g., connected to the road 102b, the right portion of road 102a and the left portion of road 102a. In addition, the node 120b is a node of degree three, e.g., connected to the road 102a, 102c, 102d.

The source road network 100 comprises a source segment 110. The source segment 110 originates at node 120a, e.g., originates at initial source node 120a, and terminates at node 120b, e.g., terminates at terminal source node 120b. Specifically, the source segment 110 does not comprise a node of degree (larger than) three apart from the initial source node 120a and the terminal source node 120b. The source segment 110 comprises a plurality of source stretches 115a, 115b, 115c, 115d, 115e, 115f, 115g. Specifically, the plurality of source stretches 115a, 115b, 115c, 115d, 115e, 115f, 115g comprises consecutive source stretches. For example, the source stretch 115b is consecutive to the source stretch 115a. In particular, the source stretch 115b adjoints the source stretch 115a.

In addition, the respective source stretches 115a, 115b, 115c, 115d, 115e, 115f, 115g adjoin each other at respective nodes 117a, 117b, 117c, 117d, 117e, 117f. Specifically, each node 117a, 117b, 117c, 117d, 117e, 117f is located at a passage from one source stretch to another source stretch. In other words, the source stretches 115a, 115b, 115c, 115d, 115e, 115f, 115g divide the source segment 110 of the source road network 100 into separate parts, e.g., stretches. For example, the node 117a is located at a passage from the source stretch 115a to the source stretch 115b. Similarly, the node 117b is located at a passage from the source stretch 115b to the source stretch 115c. Each of the nodes 117a, 117b, 117c, 117d, 117e, 117f is a node of degree two. Specifically, each of the nodes is associated with one input stretch and one output stretch. For example, node 117a is a node of degree two. Specifically, node 117a associated with input road stretch 115a and output road stretch 115b.

Generally, the source stretches 115a, 115b, 115c, 115d, 115e, 115f, 115g are associated with one or more respective road properties. For example, the first source stretch 115a is associated with a first set of road properties, the second source stretch 115b is associated with a second set of road properties, and the third source stretch 115c is associated with a third set of road properties. The number of road properties of each set of road properties may be different for each of the source stretches 115a, 115b, 115c, 115d, 115e, 115f, 115g. For example, the first set of road properties may comprise a first number of road properties, the second set of road properties may comprise a second number of road properties, and the third set of road properties may comprise a third number of road properties.

Specifically, the road properties may comprise a speed limit associated with a respective source stretch. For example, the first source stretch 115a may be associated with a first speed limit, the second source stretch 115b may be associated with a second speed limit and the third source stretch 115c may be associated with a third speed limit. In addition, or alternatively, the road properties may comprise a condition of the respective source stretch, e.g., a quality of the asphalting of respective source stretch. In addition, or alternatively, the road properties may comprise a number of lanes of the respective source stretch. For example, the first source stretch 115a may be associated with a first number of lanes, the second source stretch 115b may be associated with a second number of lanes, and the third source stretch 115c may be associated with a third number of lanes.

The consecutive source stretches 115a, 115b, 115c, 115d, 115e, 115f, 115g differ in at least one road property. Specifically, two consecutive source stretches 115a, 115b, 115c, 115d, 115e, 115f, 115g differ in at least one road property. For example, the first source stretch 115a may be associated with a first road property, e.g., a first speed limit, and the second source stretch 115b may be associated with a second road property, e.g., a second speed limit. In some embodiments, the first speed limit may be larger than the second speed limit. The respective node 117a may be located at a point where the first speed limit changes to the second speed limit. Specifically, the source stretches 115a, 115b, 115c, 115d, 115e, 115f, 115g are distributed such within the source segment 110, that the respective nodes 117a, 117b, 117c, 117d, 117e, 117f are located at positions within the source segment 110 where a road property changes. In other words, the position and/or length of the source stretches 115a, 115b, 115c, 115d, 115e, 115f, 115g is based on the road properties of the source segment 110. In some embodiments, the position and/or length of the source stretches 115a, 115b, 115c, 115d, 115e, 115f, 115g may be dictated by the distribution of road properties long the source segment 110.

The source segment 110 may comprise a set of consecutive points (not labelled) in the source network 100. For example, the set of consecutive points may be located within the source segment 110. Each of the points of the set of consecutive points in the source network may be identified by coordinates in the source network. For example, identifying each of the points by coordinates in the source network may comprise associating each of the points of the set of consecutive points with coordinates. In particular, the coordinates may comprise coordinates with respect to a coordinate system associated with the source road network 100. In some embodiments, each road of the target road network may be associated with a road identifier. For example, the road identifier may comprise a unique identifier for the respective road. For example, a first road of the target road network may be associated with a first road identifier and a second road of the target road network may be associated with a second road identifier.

Generally, the at least one source stretch 115a, 115b, 115c, 115d, 115e, 115f, 115g may comprise a subset of the set of consecutive points. For example, the first source stretch 115a may comprise a first subset of the set of consecutive points, the second source stretch 115b may comprise a second subset of the set of consecutive points, and the third source stretch 115c may comprise a third subset of the set of consecutive points.

Figure 2 shows an illustration of an exemplary embodiment of a method 200 for transferring road properties from a source road network to a target road network. For example, the method 200 comprises the step of selecting 210 a source segment of the source road network, wherein the source segment comprises at least one source stretch. For example, selecting 210 the source segment may comprise selecting the source segment such that the source segment originates at an initial source node and/or terminates at a terminal source node. In particular, the source segment may be selected such that the initial source node and/or the terminal source node comprise a node of degree different than two, e.g., a node of degree larger than or equal to three.

Specifically, the at least one source stretch may be associated with one or more respective road properties. In addition, the method 200 comprises the step of matching 220 the source segment of the source road network to the target road network such as to obtain a matching segment in the target road network. Specifically, matching 220 the source segment of the source road network to the target road network may be such that the matching segment may be configured to comprise at least one target stretch corresponding to the at least one source stretch.

Generally, the step of matching 220 may comprise associating, to each of the set of consecutive points in the source network, a road identifier of the target network. For example, associating a road identifier of the target network may comprise associating a road identifier of the target network that uniquely identifies the road. The set of consecutive points in the source network may comprise points that are identified by coordinates in the source network.

In addition, or alternatively, the method 200 may comprise the step of adapting 224 a length of the at least one target stretch of the matching segment based on a length multiplier. For example, adapting 224 the length of the at least one target stretch of the matching segment based on a length multiplier may comprise that the length multiplier is based on a ratio between a length of the source segment and the matching segment. Specifically, the step of adapting 224 may comprise computing and/or determining a length of the source segment. The length of the source segment may comprise a distance between the initial source node and the terminal source node along the source segment.

In addition, or alternatively, the step of adapting 224 may comprise computing and/or determining a length of the matching segment. For example, the length of the matching segment may comprise a distance between an initial target node and a terminal target node along the matching segment. In some embodiments, the step of adapting 224 the length based on a length multiplier may comprise adapting a length of the at least one target stretch of the matching segment based on the length multiplier. For example, the at least one target stretch of the matching segment may be rescaled based on the length multiplier, e.g., the length of the at least one target stretch of the matching segment may be multiplied with the length multiplier. Specifically, adapting 224 a length of the at least one target stretch of the matching segment may comprise adapting the length each of the at least one target stretches of the matching segment.

In addition, the method 200 further comprises the step of transferring 230 the road properties of the at least one source stretch of the source segment to the at least one target stretch of the matching segment. For example, transferring 230 the road properties of the at least one source stretch of the source segment to the at least one target stretch of the matching segment in the target road network may comprise assigning and/or associating road properties of the at least one source stretch with the corresponding at least one target stretch of the matching segment. Generally, transferring 230 the road properties of the at least one source stretch of the source segment to the at least one target stretch of the matching segment in the target road network may comprise that a geometry of the source road network and/or the target road network is not altered. In other words, the geometry of the source road network and/or the target road network may be unchanged when transferring 230 the road properties.

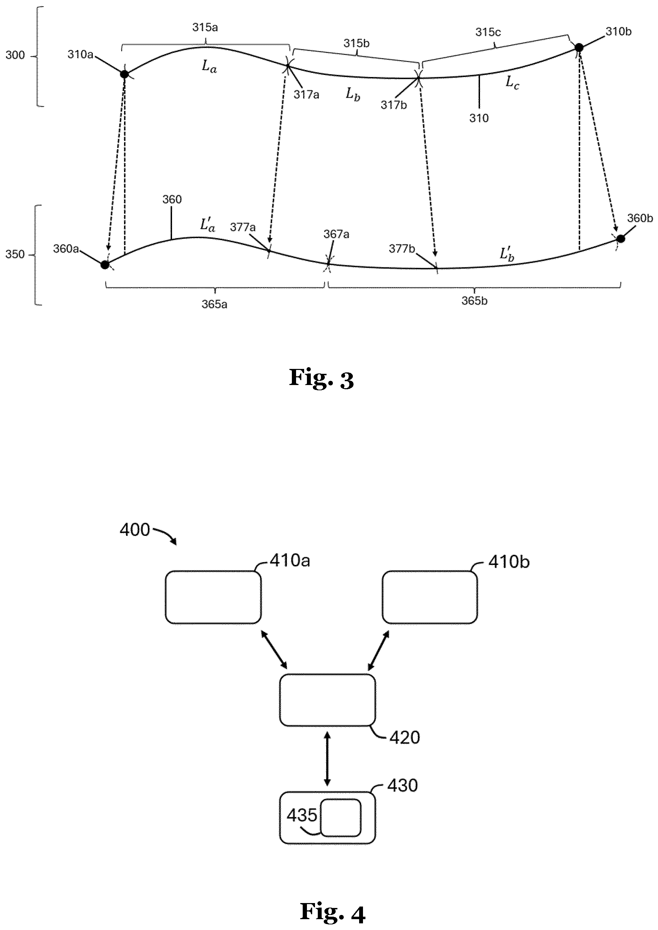

Figure 3 shows a schematic illustration of an exemplary embodiment of a method for transferring road properties from a source road network 300 to a target road network 350. Specifically, Fig. 3 shows a source segment 310 in the source road network 300. The source segment 310 is defined by the two nodes 310a, 310b, particularly the initial source node 310a and the terminal source node 310b. The initial source node 310a and the terminal source node 310b are nodes of degree equal or larger than 3. The source segment 310 in the source road network 300 comprises source stretches 315a, 315b, 315c. Specifically, the first source stretch 315a is defined by the initial source node 310a and a node 317a, the second stretch 315b is defined by the node 317a and a node 317b, and the third stretch 315c is defined by the node 317b and the terminal source node 310b. The nodes 317a, 317b, and 317c are nodes of degree two, e.g., each of the nodes 317a, 317b, 317c are adjacent to two edges. **In** other words, the node 317a corresponds to point where the first source stretch 315a transitions into the second source stretch 315b. Similarly, the node 317b corresponds to a point where the second source stretch 315b transitions into the third source stretch 315c.

The first source stretch 315a is associated with a first length *Lₐ*, the second source stretch 315b is associated with a second length *L_{b},* and the third source stretch 315c is associated with a third length *L_{c}.* Generally, the first length *Lₐ*, the second length *L_{b},* and the third length *L_{c}* may comprise a length along the first source stretch 315a, the second source stretch 315b, and the third source stretch 315c, respectively. For example, the first length *Lₐ*, the second length *L_{b},* and the third length *L_{c}* may be computed based on a norm and/or metric. Specifically, the first length *Lₐ*, the second length *L_{b},* and the third length *L_{c}* may be based on a curvature of the first source stretch 315a, the second source stretch 315b, and the third source stretch 315c.

In addition, a length *L* may be associated with source segment 310. For example, the length *L* of the source segment 310 may comprise a length between the initial source node 310a and the terminal source node 310b along the source segment 310. For example, the length *L* of the source segment 310 may be based on the length *Lₐ* of the first source stretch 315a, the length *L_{b}* of the second source stretch 315b, and the length *L_{c}* of the third source stretch 315c. For example, the length *L* of the source segment 310 may be given by the sum of the length of the respective source stretches 315a, 315b, and 315c i.e., *L = Lₐ + L_{b}* + *L_{c}.*

Generally, the source stretches 315a, 315b, and 315c are associated with one or more respective road properties. For example, the first source stretch 315a is associated with a first set of road properties, the second source stretch 315b is associated with a second set of road properties, and the third source stretch 315c is associated with a third set of road properties. The number of road properties of each set of road properties may be the same or different for the source stretches 315a, 315b, and 315c. For example, the first set of road properties may comprise a first number of road properties, while the second and/or the third set of road properties may comprise a second and/or a third number of road properties, respectively.

According to the above-described method for transferring road properties, the source segment 310 of the source road network 300 is matched to a target road network 350 such as to obtain a matching segment 360 in the target road network 350. For example, and as illustration, the matching segment 360 may be also associated with different stretches, e.g., segment 360 may comprise a first stretch 365a and a second stretch 365b. Specifically, the first stretch 365a is defined by the initial target node 360a of the matching segment 360 and a node 367a of the matching segment 360. In addition, the second stretch 365b is defined by the node 367a of the matching segment 360 and the terminal target node 360b of the matching segment 360. Generally, the matching segment 360 may inherit the first stretch 365a and the second stretch 365b from the target road network 350. In other words, the target road network 350 may (already) comprise stretches, e.g., stretches of the target road network 350 may (already) be associated with road properties. However, these stretches 365a, 365b of the target road network 350 may not affect the transfer of road properties of the source road network 300, particularly the source segment 310, to the target road network 350, particularly the matching segment 360. Specifically, as illustrated in Fig. 4, when matching the source segment 310 to the target road network 350 and/or when transferring the road properties from the source segment 310 to the matching segment 360, the stretch-structure 365a, 365b of the matching segment 360 may be ignored, e.g., the matching segment 360 may be regarded as a continuous segment without a stretch-structure 365a, 365b.

The number of stretches in the source segment 310, e.g., the source stretches 315a, 315b, 315c, differs from the number of stretches 365a, 365b that the matching segment 360 inherits from the target road network 350, i.e., from the stretches 365a, 365b that are (already) associated with the matching segment 360. In particular, the source segment 310 comprises the three source stretches 315a, 315b, 315c, whereas the matching segment 360 comprises the two inherited stretches 365a, 365b. In other words, the source segment 310 in the source road network comprises a different resolution of road properties than the matching segment 360 in the target road network 350. For example, as the source segment 310 comprises more source stretches 315a, 315b, 315c than the matching segment 360 inherits from the target road network 350, the resolution of road properties of the source segment 310 may be finer than the resolution of road properties of the matching segment 360.

The first stretch 365a of the matching segment 360 is associated with a first length ${L}_{a}^{′}$, and the second stretch 365b is associated with a second length ${L}_{b}^{′}$*.* Generally, the first length ${L}_{a}^{′}$ and the second length ${L}_{b}^{′}$ may comprise a length along the first stretch 365a, and the second stretch 365b, respectively. For example, the first length ${L}_{a}^{′}$ and the second length ${L}_{b}^{′}$ may be computed based on a norm and/or metric. Specifically, the first length ${L}_{a}^{′}$ and the second length ${L}_{b}^{′}$ may be based on a curvature of the first stretch 365a and the second stretch 365b of the matching segment 360. In addition, a length *L'* may be associated with matching segment 360. For example, the length *L'* of the matching segment 360 may comprise a length between the initial node 360a and the terminal node 360b along the matching segment 360. For example, the length *L'* of the matching segment 360 may be based on the length ${L}_{a}^{′}$ of the first stretch 365a and the length ${L}_{b}^{′}$ of the second stretch 365b. For example, the length *L'* of the matching segment 360 may be given by the sum of the length of the respective stretches 365a, 365b, i.e., *L'* = ${L}_{a}^{′} + {L}_{b}^{′}$*.*

The position, e.g., coordinates, of the initial node 360a and/or the terminal node 360b of the matching segment 360 may be shifted with respect to the position of the initial node 310a and/or the terminal node 310b of the source segment 310 in the source road network 300.For example, the position, e.g., coordinates, of the initial node 360a of the matching segment 360 may be shifted towards the left with respect to the position of the initial node 310a of the source segment 310. In addition, the position, e.g., the coordinates, of the terminal node 360b of the matching segment 360 may be shifted towards the right with respect to the terminal node 310b of the source segment 310.

Specifically, the shift in the position of the initial node 360a of the matching segment 360 with respect to the position of the initial node 310a of the source segment 310 and the shift in the position of the terminal node 360b of the matching segment 360 with respect to the position of the terminal node 310b of the source segment 310 may result in different lengths of the source segment 310 and the matching segment 360, i.e., *L* ≠ *L'.* For example, the length *L'* of the matching segment 360 is larger than the length *L* of the source segment.

In one embodiment, the difference in the lengths of the source segment and the target segment may (additionally) result from differences of the trajectory/trajectories of the segments or segment portions as presented in the different maps. A skilled person would recognize that such differences in lengths may impact the location(s) or portion(s) of the target segment with which to associate the properties transferred from the source segment (respectively, the source stretches).

According to the above-described method for transferring road properties, road properties of the source stretches 315a, 315b, 315c of the source segment 310 are transferred to the matching segment 360 in the target road network 350. Specifically, the road properties of the first source stretch 315a of the source segment 310 are transferred to a first target stretch (portion between 360a and 377a) of the matching segment 360, the road properties of a second source stretch 315b of the source segment 310 are transferred to a second target stretch (portion between 377a and 377b) of the matching segment 360, and the road properties of the third source stretch 315c of the source segment 310 are transferred to a third source stretch (portion between 377b and 360b) of the matching segment 360.

In particular, the road properties associated with the first source stretch 315a are transferred to the first target stretch defined by the initial node 360a and the node 377a, the road properties associated with the second source stretch 315b are transferred to the second target stretch defined by the node 377a and a node 377b, and the road properties associated with the third source stretch 315c are transferred to the third target stretch defined by the node 377b and the terminal node 360b. As already outlined above, the length *L* of the source segment 310 and the length *L'* of the matching segment 360 may differ, e.g., due to curvature and/or shifts of the initial 360a and/or terminal 360b nodes of the matching segment with respect to the initial 310a and/or terminal 310b nodes of the source segment 310. Therefore, transferring the road properties may comprise to adapt the length of the target stretches of the matching segment 360, i.e., the first target stretch of the matching segment 360 defined by nodes 360a and 377a, the second target stretch of the matching segment 360 defined by nodes 377a and 377b, and the third target stretch of the matching segment 360 defined by nodes 377b and 360b. Specifically, the length of the respective target stretches of the matching segment 360 may be adapted based on a length multiplier, e.g., a length multiplier *µ.* For example, the length multiplier *µ* may be based on a ration between the length *L* of the source segment 310 and the length *L'* of the matching segment 360. For example, the length multiplier *µ* may comprise the ratio between the length L of the source segment 310 and the length *L'* of the matching segment 360, i.e., $μ = \frac{L ′}{L}$.

Adapting the length of the respective target stretch of the matching segment 360 may comprise rescaling the length the respective target stretches of the matching segment 360. For example, before the rescaling, the length of the target stretches may coincide with the length of the respective source stretches. In other words, before the adaption of the length, the length of the first target stretch defined by node 360a and node 377a may be equal to the length of the first source stretch 315a, i.e., equal to *Lₐ*. Then, the length of the first target stretch defined by initial node 360a and node 377a may be rescaled such that the length of the first target stretch equals *µ* × *Lₐ*. Specifically, the node 377a of the matching segment 360 may be arranged such that a distance between initial node 360a and node 377a equals *µ* × *Lₐ*. In addition, the length of the second target stretch defined by node 377a and node 377b may be rescaled such that the length of the second target stretch equals *µ* × *L_{b}.* Specifically, the node 377b of the matching segment 360 may be arranged such that a distance between node 377a and node 377b equals *µ* × *L_{b}.* In addition, the length of the third target stretch defined by node 377b and terminal node 360b may be rescaled such that the length of the third target stretch equals *µ* × *L_{c}.* Specifically, the terminal node 360b of the matching segment 360 may be arranged such that a distance between node 377b and terminal node 360b equals *µ* × *L_{c}.*

Adaption the length of the target stretches ensures precise positioning of the road associated properties transferred from the source road segment(s) of the source road network to the target road segment(s) of the target road network.

Figure 4 shows a schematic illustration of an exemplary embodiment of a system 400 for transferring road properties from a source road network to a target road network. The system 400 may comprise a first data bank and/or storage device 410a. In addition, the system 300 may comprise a second data bank and/or storage device 410b. For example, the first data bank and/or storage device 410a may comprise the source road network. In addition, the first data bank and/or storage device 410a may comprise road properties associated with roads and/or stretches of roads of the source road network. Generally, a data bank and/or storage device comprising a road network may comprise that the data bank and/or storage device comprises corresponding data adapted to represent the road network. The second data bank and/or storage device 410b may comprise the source road network. In some embodiments, the source road network and the target road network may be stored in the same data bank and/or storage device. Specifically, the source road network and the target road network may be stored in the first data bank and/or storage device 410a. Alternatively, the source road network and the target road network may be stored in the second data bank and/or storage device 410b.

The system 400 may further comprise a processor 420. The processor 420 may be configured to communicate with the first data bank and/or storage device 410a and/or the second data bank and/or storage device 410b. Specifically, the processor 420 and the first 410a and/or second 410b data bank and/or storage device may be in electronic communication and/or otherwise coupled, e.g., operatively, communicatively, functionally, electronically, and/or electrically via one or more buses. The processor 420 may comprise an intelligent hardware device, e.g., a general-purpose processor, a DSP, a CPU, a microcontroller, an ASIC, an FPGA, a programmable logic device, a discrete gate and/or transistor logic component, a discrete hardware component, or any combination thereof.

The system 400 may further comprise a memory 430. The memory 430 may comprise random access memory (RAM) and/or read-only memory (ROM). The memory 430 may store code 435. Specifically, the code 435 stored by the memory 430 may comprise computer-readable, computer-executable code, e.g., comprising instructions that, when executed by the processor 420, cause the system 400 to perform the method for transferring road properties from a source road network to a target road network described herein. The code 435 may be stored in a non-transitory computer-readable medium such as system memory or another type of memory. In some cases, the code 435 may not be directly executable by the processor 420 but may cause a computer (e.g., when compiled and executed) to perform functions described herein. In some cases, the memory 430 may contain, among other things, a basic I/O system (BIOS) which may control basic hardware or software operation such as the interaction with peripheral components or devices.

## Claims

1. A computer-implemented method (200) for transferring road properties from a source road network (100) to a target road network, the method comprises:
selecting (210) a source segment (110) of the source road network (100), wherein the source segment (110) comprises at least one source stretch (115a-115g), the at least one source stretch being associated with one or more respective road properties;
matching (220) the source segment (110) of the source road network (100) to the target road network such as to obtain a matching segment in the target road network;
transferring (230) the road properties of the at least one source stretch (115a-115g) of the source segment (110) to at least one target stretch of the matching segment in the target road network.

2. The computer-implemented method (200) for transferring road properties according to claim 1, wherein the source segment (110) originates at an initial source node (120a) and/or terminates at a terminal source node (120b).

3. The computer-implemented method (200) for transferring road properties according to claim 2, wherein the initial source node (120a) and/or the terminal source node (120b) comprises a node of degree different than two, preferably wherein the degree is larger than or equal to three.

4. The computer-implemented method (200) for transferring road properties according to any of claims 1 to 3, wherein the source segment (110) comprises a set of consecutive points in the source network, wherein each of the points is identified by coordinates in the source road network (100).

5. The computer-implemented method (200) for transferring road properties according to claim 4, wherein the matching (220) comprises:
associating, to each point of the set of consecutive points in the source road network (100), a road identifier of the target road network.

6. The computer-implemented method (200) for transferring road properties according to one of the claims 1 to 5, wherein consecutive stretches (115a-115g) of the source segment (110) are associated with a node (117a-117f) of degree two; preferably wherein a passage of two consecutive stretches (115a-115g) comprises a node of degree two.

7. The computer-implemented method (200) for transferring road properties according to one of the claims 1 to 6, wherein consecutive stretches (115a-115g) of the source segment (110) differ in at least one road property.

8. The computer-implemented method (200) for transferring road properties according to one of the claims 1 to 7, wherein the source segment (110) comprises a plurality of source stretches (115a-115g), and the matching (220) of the source segment (110) of the source road network (100) to the target road network comprises:
jointly matching the plurality of source stretches (115a-115g) to the target road network, wherein the jointly matching preferably comprises optimizing a cost function associated with the plurality of source stretches (115a-115g) of the source segment (110).

9. The computer-implemented method (200) for transferring road properties according to one of the claims 1 to 8, further comprising adapting (228) a length of the at least one target stretch of the matching segment based on a length multiplier.

10. The computer-implemented method (200) according to claim 9, wherein the length multiplier is based on a ratio between a length of the source segment (110) and the matching segment.

11. The computer-implemented method (200) for transferring road properties according to claim 2, claim 3 or any of claims 4 to 10 when dependent on claim 2, wherein selecting (210) the source segment (110) of the source road network (100) comprises:
selecting a forward road segment from the initial node (120a) to the terminal source node (120b); and
selecting a backward road segment from the terminal source node (120b) to the initial source node (120a).

12. The computer-implemented method (200) for transferring road properties according to one of the claims 1 to 11, further comprising at least one:
injecting data representing at least part of the target road network, indicative of at least part of the transferred road properties, into a client device;
providing navigation instructions using data representing at least part of the target road network, indicative of at least part of the transferred road properties, for a user;
displaying a visualization of data representing at least part of the target road network, indicative of at least part of the transferred road properties, to a user.

13. A system comprising at least one processing unit configured to perform the computer-implemented method according to one of the claims 1 to 12.

14. A system according to claim 13, further comprising a client device, wherein:
the client device is adapted to obtain data representing at least part of the target road network, indicative of at least part of the transferred road properties.

15. A computer program comprising instructions which, when the program is executed by a computer, cause the computer to carry out the computer-implemented method according to one of the claims 1 to 12.
